# EUROPEAN PATENT APPLICATION

(11) **EP 3 181 899 A1**
(43) Date of publication of application: **21.06.2017**
(21) Application number: 16002649.8
(22) Date of filing: 14.12.2016
(51) Int. Cl.: F03D 15/00

(54) **WIND TURBINE WITH A MODULAR DRIVE TRAIN**

(30) Priority: 18.12.2015 ES 201500914
(71) Applicant: Gamesa Innovation & Technology, S.L., 31621 Sarriguren (ES)
(72) Inventor: Fernandez Sison, Alfredo, 48170 Zamudio (ES); Saenz DE Ugarte Sevilla, Patrik, 48170 Zamudio (ES); Martinez Ciudad, Alvaro, 48170 Zamudio (ES); Zabala Zabala, Jose Maria, 48170 Zamudio (ES)

(57) **Abstract**

The Invention provides a wind turbine (11) wherein the drive train section corresponding to the main shaft (21) and the first stage (42) of the gearbox (23) Is structured by two separable modules (31, 41) and comprises a connecting device (51) between the main shaft (21) and the planet carrier (47) configured to allow a flexible coupling between them, The first module (31) comprises the main shaft (21), Its housing (33) and two bearings (35, 37) as supporting means of the main shaft (21) In its housing (33). The second module (41) comprises the first stage (42) of the gearbox (23), its housing (43) and a double taper rolling bearing (45) on the side adjacent to the first module (31) as supporting means of the first stage (42) of the gearbox (23) in its housing (43).

## Description

### FIELD OF THE INVENTION

The present invention relates to a wind turbine and, more particularly, to a wind turbine drive train structured in modules for easy installation and maintenance.

### BACKGROUND OF THE INVENTION

The main structural components of the drive train in a typical wind turbine are a rotor hub, a main shaft and a gearbox that is connected to the generator by a high-medium speed shaft. The primary purpose of these structural components is to transfer the driving torque generated by the wind turbine rotor to the generator and increase the shaft speed in order to achieve a suitable rotational speed of the generator rotor. A secondary purpose is to transfer the weight of the wind turbine rotor, the thrust and the asymmetrical rotor moments, i.e. tilting and yawing moments, to the main frame and thereby further to the tower and the foundation.

In the development of the wind industry, component integration has been an important factor towards compact wind turbines minimizing as much as possible the drive train weight and avoiding the mutual interference of external and internal loads on their different components. Examples of this trend include the wind turbine described in EP 1 373 720 B1 and the gearbox described in EP 2 072 863 B1.

Another remarkable trend is the standardization of components and as an example thereof the gearbox described in US 2010/009799 A1 may be mentioned.

Both integration and standardization of components try to meet the wind industry demand of wind turbines structured in a manner that its assembly and maintenance is facilitated.

The present invention is intended to meet that demand for, particularly, both terrestrial and marine wind turbines having a power greater than 3 MW.

### SUMMARY OF THE INVENTION

The present Invention provides a wind turbine with a drive train structured for facilitating its assembly and maintenance, allowing in particular the replacement of defective components.

Singularly, the drive train section corresponding to the main shaft and the gearbox first stage is structured by two separable modules, the first module comprising the main shaft, its housing and two bearings and the second module comprising the gearbox first stage, its housing and a double taper roller bearing adjacent to the first module as the support means of the gearbox first stage in Its housing. Furthermore, said drive train section comprises a connection device between the main shaft and the planet carrier of the gearbox first stage configured to allow a flexible coupling between them.

in one embodiment the planer carrier comprises a bogie plate which supports a plurality of planetary shafts in which planetary gears are rotatably mounted by means of bearings on both sides of the bogie plate.

Other characteristics and advantages of the present invention will be clear from the following detailed description of embodiments illustrative of its object in relation to the attached drawings.

### BRIEF DESCRIPTION OF THE FIGURES

Figure 1 schematically shows the main components of a wind turbine.
Figure 2 is a cross sectional view of a drive train section of a wind turbine according to the present invention.
Figure 3 is a cross sectional view of a drive train section of a wind turbine according to an embodiment of the present invention.

### DETAILED DESCRIPTION OF THE INVENTION

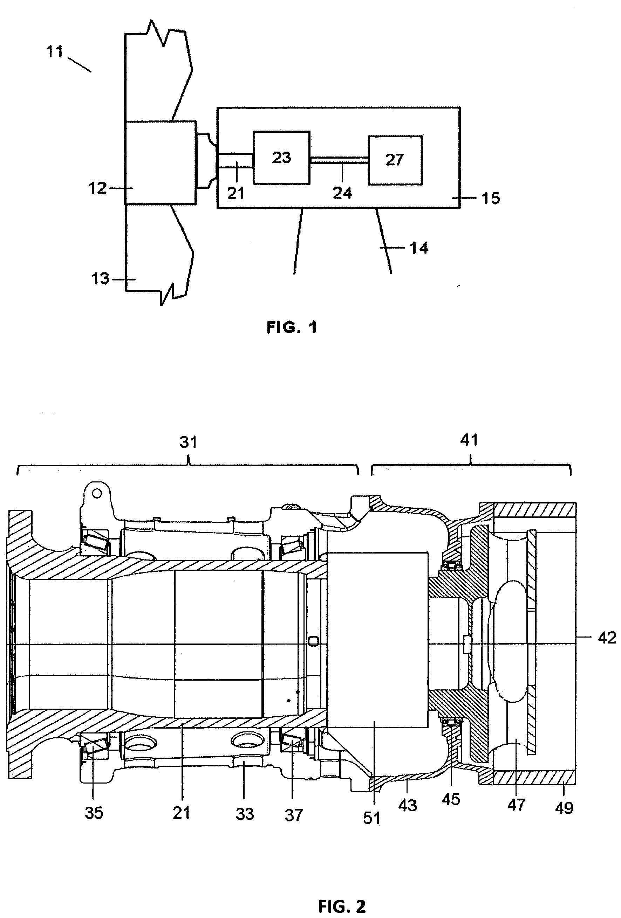

The wind turbine 11 to which this invention relates comprises (see Figure 1) a tower 14 supporting a nacelle 15 housing a generator 27 for converting the rotational energy of the wind turbine rotor into electrical energy. The wind turbine rotor comprises a rotor hub 12 and, typically, three blades 13. The rotor hub 12 is connected through a main shaft 21 to a gearbox 23 which In turn is connected to the generator 27 via a high-medium speed shaft 24 to transfer the torque generated by the wind turbine rotor and thus to achieve an appropriate speed of rotation of the generator rotor.

The present invention particularly refers to the first section of the drive train which is structured (see Figure 2) in a first module 31 and a second module 41.

The first module 31 comprises the main shaft 21, the housing 33 of the main shaft 21 and two bearings 35, 37 as supporting means of the main shaft 21 in the housing 33 which, in turn, has connection means (not shown in Figure 2) to the resistant structure of the nacelle 15 to transfer to it the loads transmitted by the main shaft 21 so that they are, in turn, transferred to the tower 14 and its foundation.

The second module 41 comprises the first stage 42 of the gearbox 23, the housing 43 of the first stage 42 of the gearbox 23 and a double taper rolling bearing 45 arranged in an "X" or an "O" configuration as supporting means of the first stage 42 of the gearbox 23 in the housing 43 which, in turn, has attachment means (not shown in Figure 2) to the resistant structure of the nacelle 15 to transfer the loads transmitted by the first stage 42 of the gearbox 23 so that they are, in turn, transferred to the tower 14 and its foundation.

The first stage 42 of the gearbox 23 is of planetary type, being only shown in Figure 2 the planet carrier 47 and the ring gear 49. The fact that the supporting means of the first stage 42 of the gearbox 23 are located in the side adjacent to the main shaft 21 allows reducing its axial dimension and consequently its weight.

The attachment/detachment between the first module 31 and the second module 41 is accomplished by attaching/detaching on the one hand their respective housings 33, 43 and on the other hand by attaching/detaching the main shaft 21 and the planet carrier 47 of the gearbox 23.

The first is carried out using attachment/detachment conventional means (not shown in Figure 2) between such structures.

The latter is performed by a connecting device 51 of the main shaft 21 and the planet carrier 47 configured to provide a flexible coupling between them that allows the transmission of the driving torque generated by the rotor of the wind turbine 11 and filters and avoids the transmission of that other rotor loads (weight thrust and asymmetrical rotor moments) as they are absorbed by the bearings 35, 37 of the main shaft 21. Therefore the only loads introduced into the first stage 42 of the gearbox 23 are those generated by the connecting device 51 that are much lower than those generated by the rotor.

This connecting device 61 can be configured by, for example, two cooperating parts attached to the main shaft 21 and to the planet carrier 47 and complementary elastomeric means arranged to absorb possible radial misalignments between them.

Other configurations of a connecting device 51 allowing said flexible coupling are described in WO 2012/052022 A1.

The combination of a flexible coupling between the main shaft 21 and the planet carrier 47 of the first stage 42 of the gearbox 23 with the double taper rolling bearing 45 supporting the first stage 42 of the gearbox 23 arranged on the side adjacent to the first module 31 allows that the only rotor forces being transmitted to the first stage 42 of the gearbox 23 are those of the driving torque which facilitates structuring the first part of the drive train in the modules 31, 41.

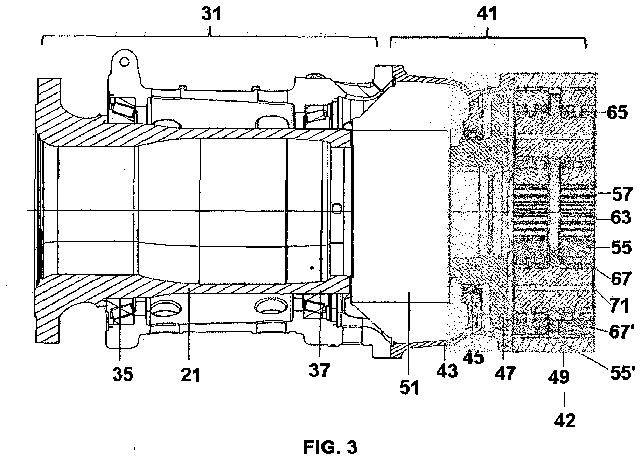

In a preferred embodiment, the first stage 42 of the gearbox 23 is configured (see Figure 3) with a planet carrier 47 comprising a bogie plate 65 which supports a plurality of planet shafts 71 on which planetary gears 55, 55' are rotatably mounted by means of bearings 67, 67' on both sides of the bogle plate 65. The driving torque transmitted by the main shaft 21 to the planet carrier 47 is thus transmitted to the planetary gears 55, 55'. The interaction of the planetary gears 55, 55' with the static ring gear 49 and with the sun gear 57 transmits the driving torque to shaft 63.

This configuration of the first stage 42 of the gearbox 23, known as a "bogie" configuration, helps to prevent misalignments of the planetary shafts 71 with respect to the ring gear 49. In other words, the sun gear 57, the planetary gears 25, 25' and the ring gear 49 are substantially aligned in an axial direction parallel to the rotational axis of the planet carrier 47.

Thus, If to the combination of a flexible coupling between the main shaft 21 and the gearbox 23 with a double taper rolling bearing 45 for supporting the first stage 42 of the gearbox 23, a "bogie" configuration of the first stage 42 of the gearbox 23 is added, a greater assurance that the only forces transmitted from the rotor to the gearbox 23 are those of the driving torque can be reached.

Although the present invention has been described in connection with various embodiments, it will be appreciated from the specification that various combinations of elements, variations or improvements therein may be made, and are within the scope of the invention as defined by the appended claims.

## Claims

1. Wind turbine (11) comprising;
- a tower (14);
- a drive train Inside a nacelle (15) Including a rotor hub (12) supporting the rotor blades (13), a gearbox (23) having a planetary-type first stage (42) with the planet carrier (47) connected to the rotor hub (12) by means of a main shaft (21) and a generator (27) connected to the gearbox (23) by a high-medium speed shaft (24), wherein the drive train section corresponding to the main shaft (21) and the first stage (42) of the gearbox (23):
a) is structured by two separable modules (31, 41); the first module (31) comprising the main shaft (21), Its housing (33) and two bearings (35, 37) as supporting means of the main shaft (21) in its housing (33); the second module (41) comprising the first stage (42) of the gearbox (23), its housing (43) and a double taper rolling bearing (45) on the side adjacent to the first module (31) as supporting means of the first stage (42) of the gearbox (23) In its housing (43);
b) comprises a connecting device (51) between the main shaft (21) and the planet carrier (47) configured to allow a flexible coupling between them,

2. Wind turbine (11) according to claim 1, wherein the planet carrier (47) comprises a bogie plate (65) that supports a plurality of planet shafts (71) In which planetary gears (55, 55') are rotatably mounted via bearings (67, 67') on both sides of the bogie plate (65).

3. Wind turbine (11) according to any of claims 1-2, wherein the double taper rolling bearing (45) is arranged in an "X" configuration.

4. Wind turbine (11) according to any of claims 1-2, wherein the double taper rolling bearing (45) is arranged in an "○" configuration.
